# EUROPÄISCHE PATENTSCHRIFT

(11) **EP 2 398 942 B1**
(45) Veröffentlichungstag und Bekanntmachung des Hinweises auf die Patenterteilung: **14.11.2012**
(21) Anmeldenummer: 10703476.1
(22) Anmeldetag: 12.02.2010
(51) Int. Cl.: D01F 6/60, D01D 5/06

(54) **VERFAHREN ZUR HERSTELLUNG EINES FILAMENTGARNS AUS EINEM AROMATISCHEN POLYAMID**
METHOD FOR PRODUCING A FILAMENT YARN FROM AN AROMATIC POLYAMIDE
PROCÉDÉ DE FABRICATION D'UN FIL CONTINU EN UN POLYAMIDE AROMATIQUE

(30) Priorität: 17.02.2009 EP 09153028
(43) Veröffentlichungstag der Anmeldung: 28.12.2011
(73) Patentinhaber: Teijin Aramid B.V., 6824 BM Arnhem (NL)
(72) Erfinder: BUSSCHER, Leonardus A.G., NL-6921 AZ Duiven (NL); MEERMAN, Jacobus Johannes, NL-6821 LZ Arnhem (NL); HOOGERWERF, Ronald Eduard, NL-6843 HR Arnhem (NL); BROEKHOF, Alexander L.L., NL-6824 AP Arnhem (NL)
(74) Vertreter: Heimann, Anette
(86) Internationale Anmeldenummer: PCT/EP2010/051755
(87) Internationale Veröffentlichungsnummer: WO 2010/094620

(56) Entgegenhaltungen:
- EP-A- 0 138 011
- EP-A- 0 823 499
- WO-A-98/18984
- US-A- 5 173 236

## Beschreibung

Die Erfindung betrifft ein Verfahren zur Herstellung eines Filamentgarnes aus einem aromatischen Polyamid, bei welchem eine optisch anisotrope-Aramid-Spinnlösung mittels eines Filters mit Durchlassöffnungen innerhalb einer Spinndüsenanordnung gefiltert und innerhalb der Spinndüsenanordnung durch eine Mehrzahl von Öffnungen extrudiert wird, wobei die extrudierte anisotrope-Aramid-Spinnlösung durch einen Luftspalt geführt, dabei verstreckt und in einem wässrigen Koagulationsbad gesammelt wird. Die Erfindung betrifft auch ein para-aromatisches Polyamidfilamentgarn mit einem Garntiter von wenigstens 300 dtex, ein textiles Flächengebilde, welches solche Garne aufweist, sowie einen penetrationshemmenden Artikel, der ein solches Garn aufweist.

Ein Verfahren zur Herstellung von Filamentgamen aus aromatischem Polyamid ist aus der Druckschrift EP 0 823 499 A1 bekannt. Bei dem bekannten Verfahren werden Garne mit einem Filamenttiter von weniger als 0,8 dtex hergestellt. Ein Hauptaugenrnerk der Druckschrift EP 0 823 499 A1 liegt dabei in der Herstellung von Garnen, die einen Filamenttiter von 0,3 bis 0,8 dtex aufweisen. Die in dieser Druckschrift offenbarten Garne haben eine Festigkeit von maximal 2630 mN/tex bei einem Garntiter von 728 dtex und einem Filamenttiter von 0,5 dtex.

Auch mit dem in der Druckschrift WO 98/18984 A1 beschriebenen Verfahren lassen sich Garne aus einem para-aromatischen Polyamid herstellen, deren Filamente einen Filamenttiter von beispielsweise 0,66 dtex (0,6 den) aufweisen. Der Garntiter dieser Garne beträgt jedoch nur 162 denier (178 dtex).

In der Druckschrift JP 11 189 916 wird ein aromatisches Polyamidfilamentgarn offenbart. In den Beispielen 1 und 2 weist das Garn jeweils einen Garntiter von 270 denier (297 dtex) auf, wobei im Bespiel 1 die Festigkeit des Garns 31,3 g/den (2845 mN/tex) betrug und im Beispiel 2 die Festigkeit bei 30,9 g/den (2827 mN/tex) lag. Der Einzeltiter betrug bei den Garnen im Beispiel 1 und 2 jeweils 0,6 denier (0,66 dtex). Im Beispiel 6 wird ein Garn vorgeschlagen, dass einen Garntiter von 1000 denier (1100 dtex) aufweist und eine Festigkeit von 28,3 g/d (2572 mN/tex) hat. Im Vergleich mit den Beispielen 1 und 2 wird bei dem Beispiel 6 deutlich, dass mit zunehmendem Garntiter die Festigkeit dieser Garne abnimmt.

Nachteilig bei den bisher bekannten Verfahren ist jedoch, dass insbesondere bei der Herstellung von Garnen mit einem geringen Filamenttiter der Spinnprozess bereits nach wenigen Stunden durch das Reißen der Filamente während des Spinnens gestört wird. Des weiteren ist die Festigkeit, der nach dem Stand der Technik hergestellten Filamentgarne bei dem gleichzeitigen Vorliegen von hohen Gamtitern aber geringen Filamenttitern, nachteilig klein.

Die Aufgabe der vorliegenden Erfindung ist es daher, ein Verfahren zur Herstellung eines Filamentgarns aus einem aromatischen Polyamid zur Verfügung zustellen, bei dem der Spinnprozess über einen längeren Zeitraum durchgehend durchgeführt werden kann. Hierbei soll insbesondere das Reißen von Filamenten während des Spinnprozesses verhindert werden. Des weiteren soll die Festigkeit dieses Garns trotz kleiner Filamenttiter hoch sein.

Diese Aufgabe wird erfindungsgemäß dadurch gelöst, dass eine optisch anisotrope-Aramid-Spinnlösung mittels eines Filters mit Durchlassöffnungen innerhalb einer Spinndüsenanordnung gefiltert und innerhalb der Spinndüsenanordnung durch eine Mehrzahl von Spinndüsenöffnungen extrudiert wird, wobei die extrudierte anisotrope-Aramid-Spinnlösung durch einen Luftspalt geführt, dabei verstreckt und in einem wässrigen Koagulationsbad gesammelt wird, wobei die optisch anisotrope-Aramid-Spinnlösung in der Spinndüsenanordnung über einen Strömungswiderstand den Spinndüsenöffnungen zugeführt wird, wobei der Strömungswiderstand näher an den Spinndüsenöffnungen angeordnet wird als der Filter und der Strömungswiderstand und der Filter beabstanden zueinander sind.

Unter einer Spinndüsenanordnung soll eine Anordnung verstanden werden, in der sich mindestens der Filter, der Strömungswiderstand und die Spinndüsenplatte in unmittelbarer Nähe zueinander befinden. Mit unmittelbarer Nähe ist dabei gemeint, dass der größte Abstand zwischen dem Filter und der Spinndüsenplatte innerhalb der Spinndüsenanordnung weniger als 10 cm, bevorzugt weniger als 5 cm, ganz besonders bevorzugt weniger als 2 cm beträgt. Befinden sich die Spinndüsenplatte, der Filter und der Strömungswiderstand beispielsweise im Spinndüsenkopf, so stellt der Spinndüsenkopf die Spinndüsenanordnung im Sinne der Erfindung dar. Ein (Vor-)Filter beispielsweise, der sich in der Nähe eines Mischelements oder einer Spinnlösungspumpe befindet, wäre kein Filter innerhalb einer Spinndüsenanordnung, da der Filter sich nicht in unmittelbarer Nähe zu der Spinndüsenplatte befindet. In der Druckschrift DE 197 15 584 A1 wird beispielsweise eine Spinndüsenvorrichtung offenbart, in der lediglich ein Stoff-Feinfilter innerhalb einer Spinndüsenanordnung vorgesehen ist. Ein erster Vor-Filter ist innerhalb eines zylindrischen Formkörpers vorgesehen und somit außerhalb der Spinndüsenanordnung.

Es soll deutlich gemacht werden, dass die zu verarbeitende Spinnlösung auch bei den erfindungsgemäßen Verfahren vorgefiltert wird, bevor sie der Spinndüsenanordnung zugeführt wird. Der hierfür benötigte Vor-Filter ist aber nicht in unmittelbarer Nähe zu den Spinndüsenöffnungen und dem Strömungswiderstand und gehört somit nicht zur Spinndüsenanordnung.

Bevorzugt weisen der Strömungswiderstand und der Filter Durchlassöffnungen auf, wobei bevorzugt die Durchlassöffnungen des Filters kleiner sind als die Durchlassöffnungen des Strömungswiderstandes. Unter kleineren Durchlassöffnungen des Filters gegenüber den Durchlassöffnungen des Strömungswiderstandes soll auch verstanden werden, wenn etwa 50% bis 100 %, besonders bevorzugt etwa 60% bis 80% aller Durchlassöffnungen des Strömungswiderstandes größer sind als die Durchlassöffnungen des Filters, wobei bevorzugt die Durchlassöffnungen des Filters zum Vergleich verwendet werden, die etwa 40% bis 100%, besonders bevorzugt 60% bis 90% aller Durchlassöffnungen des Filters ausmachen.

Bevorzugt ist die Größe der Durchlassöffnungen des Filters so groß, dass eine Kugel mit einem maximalen Durchmesser von x µm die Durchlassöffnungen des Filters passieren kann, und wobei die Größe der Durchlassöffnungen des Strömungswiderstandes so groß sind, dass eine Kugel mit einem maximalen Durchmesser von y µm die Durchlassöffnungen des Strömungswiderstandes passieren kann, wobei x < y.

Bevorzugt ist der Durchmesser der Spinndüsenöffnungen so groß, dass eine Kugel mit einem maximalen Durchmesser von z µm die Spinndüsenöffnungen passieren kann, und wobei die Größe der Durchlassöffnungen des Strömungswiderstandes so groß sind, dass eine Kugel mit einem maximalen Durchmesser von y µm die Durchlassöffnungen des Strömungswiderstandes passieren kann, wobei z ≥ y ist.

Wenn eine zusätzliche Filterfunktion des Strömungswiderstandes verhindert werden soll, sollte bei der Wahl der Größe der Durchlassöffnungen des Filters und des Strömungswiderstandes darauf geachtet werden, dass Teilchen, die durch den Filter in der Spinndüsenanordnung gelangen unter normalen Flussbedingungen (kein zusätzlicher Druck) auch den Strömungswiderstand passieren können. Ein Teilchen, das den Filter in der Spinndüsenanordnung passiert hat, sollte in diesem Fall folglich nicht von dem Strömungswiderstand zurückgehalten werden.

In einer Ausführungsform ist es denkbar, dass der Strömungswiderstand Durchlassöffnungen aufweist, die kleiner sind als die Durchlassöffnungen des Filters innerhalb der Spinndüsenanordnung. Hierbei können alle Durchlassöffnungen oder nur einige der Durchlassöffnungen des Strömungswiderstandes kleiner sein als alle Durchlassöffnungen des Filters oder als einige Durchlassöffnungen des Filters in der Spinndüsenanordnung. Beispielsweise können 50% bis 100% der Durchlassöffnungen des Filters größer sein als ausgewählte Durchlassöffnungen im Strömungswiderstand, deren relative Häufigkeit im Strömungswiderstand bei 40% bis 100% liegen.

Vorzugsweise weisen die Spinndüsenöffnungen einen Durchmesser von 30 µm bis 70 µm, besonders bevorzugt von 40 µm bis 50 µm und ganz besonders bevorzugt von 45 µm auf. Weiterhin bevorzugt weisen die Durchlassöffnungen des Strömungswiderstandes eine Größe von 5 µm bis 70 µm, ganz besonders bevorzugt von 9 µm bis 25 µm auf. Ebenfalls bevorzugt weist der Filter Durchlassöffnungen mit einer Größe von 1 µm bis 30 µm, ganz besonders bevorzugt von 15 µm auf.

Bevorzugt sind die Durchlassöffnungen des Strömungswiderstandes so groß, dass Kugeln mit einem maximalen Durchmesser von 5 µm bis 70 µm die Durchlassöffnungen des Strömungswiderstandes passieren können.

Weiterhin bevorzugt sind die Durchlassöffnungen des Filters so groß, dass Kugeln mit einem maximalen Durchmesser von 1 µm bis 30 µm die Durchlassöffnungen des Filters passieren können.

Vorzugsweise liegen die Mehrzahl der Spinndüsenöffnungen, die Mehrzahl der Durchlassöffnungen des Strömungswiderstandes und/oder die Mehrzahl der Durchlassöffnungen des Filters in jeweils einer Ebene, wobei diese Ebenen parallel zueinander verlaufen. Besonders bevorzugt ist, wenn der Strömungswiderstand den Spinndüsenöffnungen gegenüberliegend angeordnet wird, so dass die Durchlassöffnungen des Strömungswiederstandes gegenüber den Spinndüsenöffnungen liegen. Beispielsweise können die Spinndüsenöffnungen in Feldern über die Spinndüsenplatte verteilt vorgesehen sein. Ein solcher Aufbau wird beispielsweise in der Druckschrift WO 97/15706 A1 in den Figuren 1 bis 4 dargestellt. Bezüglich des Strömungswiderstandes bedeutet dies, dass der Strömungswiderstand jedem Feld von Spinndüsenöffnungen gegenüberliegend angeordnet wird. Der Strömungswiderstand und die Spinndüsenöffnungen liegen somit in parallelen Ebenen.

Bevorzugt wird als Strömungswiderstand ein Drahtgeflecht aus Metall verwendet. Im allgemeinen kann jedoch als Material für den Strömungswiderstand jedes säurebeständige und hitzebeständige Material verwendet werden, das eine gute Formstabilität aufweist. Bevorzugt ist das Material zur Herstellung des Strömungswiderstandes Schwefelsäure beständig und verformt sich bei Temperaturen von 0 bis 80 °C nicht. Als mögliche Materialien zur Herstellung des Strömungswiderstandes sollen beispielhaft textile Material, wie Vlies oder Gewebe, aber auch Keramik, Polyamide oder Glas genannt werden. Für die Ausgestaltung des Strömungswiderstandes ist eine Mehrzahl von Alternativen möglich. In einer bevorzugten Ausführungsform wird der Strömungswiderstand durch ein Drahtgeflecht gebildet. Bei einem Strömungswiderstand mit einer geringen Drahtdicke kann vorteilhaft verhindert werden, dass unerwünschte große "Schatten" durch die Drahtdicke auf die Spinndüsenöffnungen fallen. Durch die "Schatten" werden die Spinndüsenöffnungen durch die Struktur (Draht) des Strömungswiderstandes abgedeckt, beziehungsweise verdeckt. Strömungswiderstände aus Strukturen mit einer geringen Dicke sind daher bevorzugt. Da solche Strömungswiderstände unter Umständen instabil sein können, ist es bevorzugt, wenn der Strömungswiderstand auf einer Stützstruktur aufliegt. Durch die Abstützung des Strömungswiderstandes auf der Stützstruktur kann vorteilhaft verhindert werden, dass der dünne Strömungswiderstand durch den beim Verfahren vorliegenden Druck beschädigt oder in der Form verändert wird. Die Stützstruktur kann beispielsweise ein kreisförmiger Rahmen mit Verstrebungen innerhalb des Rahmens - also radähnlich - sein. Des Weiteren kann die Stützstruktur als Gitter vorgesehen sein, wobei die Gitterdurchlässe wesentlich größer sind als die Durchlässe des Strömungswiderstandes. In beiden Ausführungsformen der Stützstruktur werden die Durchlässe der Stützstruktur, auch Ausschnitte genannt, innerhalb der Stützstruktur so zu den Spinndüsenöffnungen platziert, dass die Spinndüsenöffnungen überhaupt nicht oder kaum von der Stützstruktur abgedeckt werden. Selbstverständlich ist es auch möglich, den Strömungswiderstand so stabil auszuführen, dass keine Stützstruktur benötigt wird.

Durch das erfindungsgemäße Verfahren kann aromatisches Polyamidfilamentgarn bis zu 3 Stunden lang durchgehend ohne Unterbrechung gesponnen werden. Besonders bevorzugt kann das aromatische Polyamidfilamentgarn bis zu drei Tage ohne Unterbrechung gesponnen werden. Ganz besonders bevorzugt kann mit dem erfindungsgemäßen Verfahren 30 Tage lang ohne Unterbrechung gesponnen werden.

Unter einem durchgehenden Spinnvorgang ohne Unterbrechung soll verstanden werden, wenn der Spinnprozess nicht unterbrochen werden muss, weil einzelne oder mehrere Filamente während des Spinnprozesses abreißen, fehlerhaft oder gar nicht mehr gesponnen werden.

Die Spinnlösung ist bevorzugt eine Lösung aus poly (para-phenylen terephthalamid) [PPTA] in konzentrierter Schwefelsäure. Die PPTA Spinnlösung weist bevorzugt eine Polymerkonzentration von 10 Gew. % bis 20 Gew. % auf.
Das wässrige Koagulationsbad weist vorzugsweise eine Schwefelsäurekonzentration von 0 % bis 20 % auf. Weiterhin bevorzugt wird das Koagulationsbad während des Spinnprozesses auf einer Temperatur von -5 °C bis 20 °C, besonders bevorzugt von 0 °C bis 10 °C gehalten und weist eine Tiefe von 10 mm bis 20 mm auf.

Ein weiterer Gegenstand der Erfindung ist ein para-aromatisches Polyamidfilamentgarn mit einem Garntiter von wenigstens 300 dtex und einer Festigkeit von mindestens 2.700 mN/tex. Das erfindungsgemäße Polyamidfilamentgarn weist ein Bündel von Filamenten mit einem Filamenttiter von 0,8 dtex bis mehr als 0,3 dtex auf. Besonders bevorzugt beträgt die Festigkeit des Polyamidfilamentgams 2.750 mN/tex und der Filamenttiter beträgt vorzugsweise 0,6 bis 0,4 dtex. Die Festigkeit des Polyamidfilamentgarns wird dabei nach dem Standard ASTM D - 885 bestimmt.

Zur Herstellung eines Polyamidfilamentgams aus PPTA mit einer hohen Festigkeit wird bevorzugt die Temperatur des Koagulationsbades und die Schwefelsäurekonzentration im Koagulationsbad niedrig gewählt.

Das erfindungsgemäße para-aromatische Polyamidfilamentgarn eignet sich hervorragend zur Herstellung von textilen Flächengebilden beziehungsweise zur Herstellung von penetrationshemmenden Artikeln, die das erfindungsgemäße para-aromatische Polyamidfilamentgarn aufweisen.

Unter einem penetrationshemmenden Artikel soll beispielsweise eine Schutzweste, eine Schutzjacke, ein Helm, eine Fahrzeugverkleidung oder eine Gebäudeverkleidung verstanden werden, durch die eine durchdringungshemmende Wirkung erzielt wird.

Zusammenfassend können bei dem erfindungsgemäßen Verfahren in vorteilhafter Weise Filamentgarne aus einem aromatischen Polyamid, deren Filamente einen Filamenttiter zwischen 0,8 und 0,3 dtex aufweisen, über einen längeren Zeitraum hergestellt werden als dies mit Hilfe der Verfahren aus dem Stand der Technik erreichbar wäre. Möglich wird dies durch die Verwendung eines Strömungswiderstandes, wobei der Strömungswiderstand bevorzugt kleine Durchlassöffnungen aufweist und das Material zur Bildung des Strömungswiderstandes eine geringe Dicke aufweist. Das erfindungsgemäße Verfahren ist besonders geeignet, Filamentgarne mit einem Filamenttiter im Bereich von 0,8 bis mehr als 0, 3 dtex, insbesondere von 0,6 bis 0,4 dtex, kontinuierlich über einen längeren Zeitraum herzustellen. Die nach dem erfindungsgemäßen Verfahren hergestellten Garne weisen aber überraschender Weise, bei Filamenttitern von höchstens 0,8 dtex, eine höhere Festigkeit auf als die nach den bisher bekannt gewordenen Verfahren hergestellten Garne. Beispielsweise ergibt sich aus der Druckschrift EP 0 823 499 A1, dass die nach dem dort beschriebenen Verfahren hergestellten Garne bei einem Filamenttiter von weniger als 0,8 dtex Festigkeiten von höchstens 2.630 mN/tex aufweisen, während die nach dem erfindungsgemäßen Verfahren hergestellten Garne Festigkeiten von mindestens 2.700 mN/tex und sogar deutlich über 2.800 mN/tex aufweisen. Insbesondere lässt sich aromatisches Polyamidfilamentgarn mit einem Garntiter von wenigstens 300 dtex, bestehend aus einem Bündel von Filamenten mit einem Filamenttiter von 0,8 bis mehr als 0,3 dtex und einer Festigkeit von 2.700 bis 3.250 mN/tex herstellen.

Die Erfindung wird im Folgenden anhand von Zeichnungen beschrieben.
- Figur 1: stellt schematisch eine Spinndüsenanordnung im Querschnitt dar.
- Figuren 2 bis 5: stellen schematisch jeweils Querschnitte von einer Spinndüsenanordnung mit einem Filter und einem Strömungswiderstand dar.
- Figur 6: stellt schematisch eine Spinndüsenanordnung mit daran angesetzten Bauteilen dar.

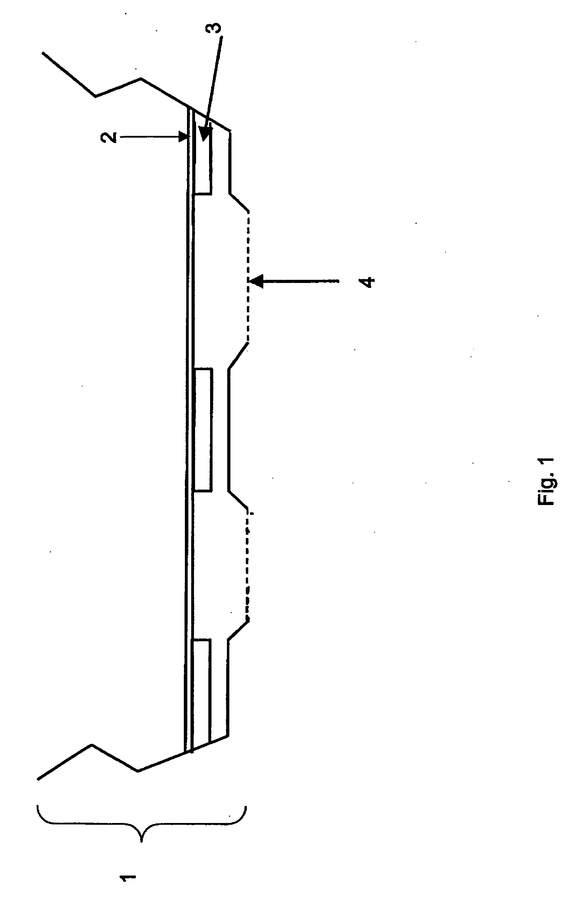

In der Figur 1 ist schematisch eine Spinndüsenanordnung 1 im Querschnitt dargestellt, wobei die Spinndüsenanordnung 1 im Ausführungsbeispiel eine Mehrzahl von durchgehenden Spinndüsenöffnungen 4 aufweist, die feldartig über eine Spinndüsenplatte verteilt sind. Obwohl jeweils eine Mehrzahl von Spindüsenöffnungen 4 in jedem Feld der Spindüsenplatte vorliegt, wird im weiteren auch von einer einzelnen Spinndüsenöffnung 4 gesprochen. Von einem Koagulationsbad ausgehend gesehen liegt oberhalb der Spinndüsenöffnung 4 eine Platte 3 mit Ausschnitten. Die Ausschnitte der Platte 3 sind in Form und Größe den Feldern der Spinndüsenöffnungen 4 angepasst, so dass die Spinndüsenöffnungen 4 nicht von der Platte 3 abgedeckt werden. Genauer weisen die Ausschnitte der Platte 3 mindestens die Größe der Felder der Spinndüsenöffnungen 4 auf, wobei die Form eines Ausschnittes im Wesentlichen der Form eines Feldes entspricht. Die Platte 3 ist beabstandet zu der Spinndüsenplatte angeordnet und besteht beispielsweise aus Metall. Die Platte 3 dient als Stützstruktur, um einen darauf aufliegenden Strömungswiderstand 2 zu stabilisieren und wird daher auch als Stützstruktur 3 bezeichnet. Der Strömungswiderstand 2 kann über den Ausschnitten der Stützstruktur 3 und den Spinndüsenöffnungen 4 verlaufen und beispielsweise ein Drahtgeflecht oder ein Sieb sein oder aus einer Mehrzahl von einzelnen Drahtgeflechten bestehen. Selbstverständlich sind auch Geflechte aus anderen Materialien als Metall als Strömungswiderstand 2 möglich. Bei der Verwendung von einzelnen Drahtgeflechten sind die einzelnen Drahtgeflechte zumindest teilweise in Kontakt mit der Stützstruktur 3. Das Drahtgeflecht weist bevorzugt Maschen auf. Die Maschengröße des Strömungswiderstandes 2 ist dabei beispielsweise größer, als die Maschengröße eines Filters 8 (in Figur 1 nicht dargestellt), der vor dem Strömungswiderstand 2 und innerhalb der Spinndüsenanordnung 1 platziert ist und die Spinnlösung ein weiteres mal filtert. Der Strömungswiderstand 2 soll im Aufbau somit keine Filterwirkung haben, da die Durchlassöffnungen des Filters 8 kleiner sind als die Durchlassöffnungen des Strömungswiderstandes 2. Hierdurch kann - bei einer Ausführung des Strömungswiderstandes 2 als Drahtgeflecht - auch ein unstabiler Draht zur Bildung des Strömungswiderstandes 2 verwendet werden, da das Drahtgeflecht keine Elemente aus der Spinnlösung zurückhalten muss. Durch die Stützstruktur 3 kann vorteilhaft verhindert werden, dass der Strömungswiderstand 2 durch die durch den Strömungswiderstand 2 fließende Spinnlösung beschädigt wird. Trotz des unstabilen Drahts setzt der Strömungswiderstand 2 der Spinnlösung jedoch einen Widerstand entgegen. Durch den vom Strömungswiderstand 2 erzeugten Widerstand wird in vorteilhafter Weise der Spinnprozess so beeinflusst, dass durchgehende Spinnprozesse von mehr als 3 Tagen möglich sind. Ein durchgehender Spinnprozess soll dabei als beendet angesehen werden, wenn die ersten der zu spinnenden Filamente während des Spinnprozess ungewollt abreißen und/oder fehlerhaft oder gar nicht mehr gesponnen werden. Besonders bevorzugt wird das erfindungsgemäße Verfahren zur Erzeugung von Filamentgarnen mit einem geringen Filamenttiter aber hoher Festigkeit verwendet.

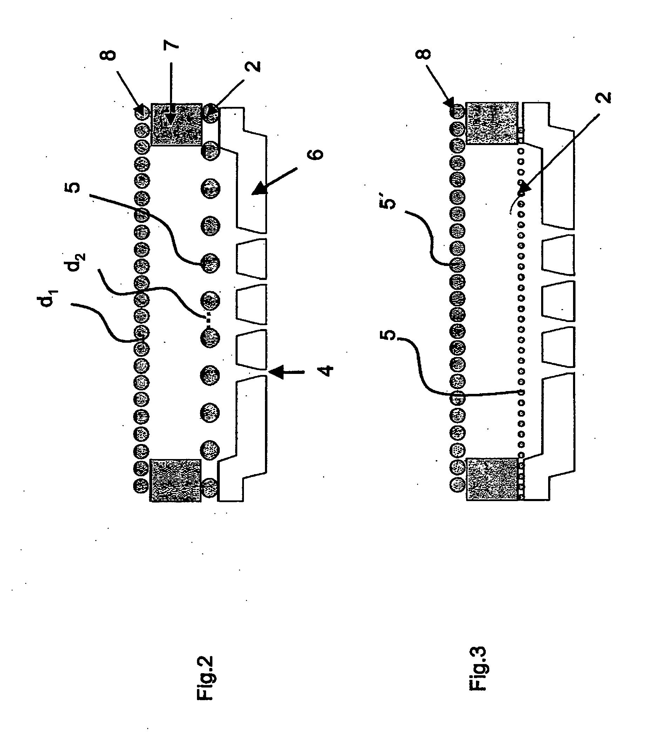

In der Figur 2 ist schematisch ein Querschnitt einer Spinndüsenanordnung 1 im Detail dargestellt. Der Filter 8 ist oberhalb des Strömungswiderstandes 2 und oberhalb von den Spinndüsenöffnungen 4 vorgesehen. Damit der Filter 8 und der Strömungswiderstand 2 nicht aufeinander liegen, ist ein Abstandshalter 7 vorgesehen, auf dem der Filter 8 aufliegt. Die Spinndüsenöffnungen 4 liegen innerhalb einer Spinndüsenplatte 6 und verjüngen sich im Ausführungsbeispiel in Richtung eines (nicht dargestellten) Koagulationsbades. Der Filter 8 weist Durchlassöffnungen auf, die einen Durchmesser von d₁ besitzen. Der Strömungswiderstand 2 weist ebenfalls Durchlassöffnungen mit einem Durchmesser von d₂ auf. Der Durchmesser d₁ der Durchlassöffnungen des Filters 8 ist im Ausführungsbeispiel kleiner als der Durchmesser d₂ der Durchlassöffnungen des Strömungswiderstandes 2. In dem in Figur 2 gezeigten Ausführungsbeispiel wird der Strömungswiderstand 2 durch die Struktur 5 gebildet, die sich in die Papierebene hinein erstreckt. Die Struktur 5 ist in diesem Ausführungsbeispiel - verglichen mit den Spinndüsenöffnungen 4 - relativ dick ausgeführt. Hierdurch können die Spinndüsenöffnungen 4 durch die Struktur 5 teilweise oder vollständig verdeckt ("abgeschattet") werden. In Folge dessen kann der Fluss der Spinnlösung zu den Spinndüsenöffnungen 4 beeinfluss werden, weswegen bevorzugt die Dicke der Struktur 5 kleiner gewählt wird als der Durchmesser der Spinndüsenöffnungen 4. Bevorzugt weisen die Spinndüsenöffnung 4 eine Größe auf, die etwa 150% der Dicke der Struktur 5 entspricht.

Im Ausführungsbeispiel der Figur 3 ist - wie auch in der Figur 2 - schematisch dargestellt, dass der Strömungswiderstand 2 und der Filter 8 durch eine Roststruktur gebildet werden. Der Rost des Strömungswiderstandes 2 und der Rost des Filters 8 werde dabei durch die Strukturen 5 und 5' gebildet, die in der Papierebene verlaufen und beispielsweise Drähte sein können. Senkrecht zu den Strukturen 5 und 5', aber mit diesen in Kontakt, verlaufen weitere Strukturen (nicht dargestellt), so dass ein Gitterrost entsteht. Die Strukturen 5, die den Strömungswiderstand 2 bilden, können kleiner sein als die Strukturen 5', die den Filter 8 bildet. Trotzdem kann bei dem eben genannten Fall der Durchmesser d₁ der Durchlassöffnungen des Filters 8 kleiner sein als der Durchmesser d₂ der Durchlassöffnungen des Strömungswiderstandes 2, wenn die Strukturen 5' des Filters 8 näher zusammen stehen als die Strukturen 5 des Strömungswiderstandes 2. Die Strukturen 5 des Strömungswiderstandes 2 und die Struktur 5' des Filters 8 können beispielsweise auch Einzeldrähte sein, wobei die Drahtdicke die Größe der Strukturen 5 und 5' festlegt. Im Ausführungsbeispiel der Figur 3 wurde die Dicke der Struktur 5 so gewählt, dass sie wesentlich kleiner ist als der Durchmesser der Spinndüsenöffnungen 4. Hierdurch wird keine Spinndüsenöffnung 4 durch eine Struktur 5 vollständig abgedeckt. Somit wird der Fluss der Spinnlösung bei einem Spinnprozess nicht in der Form behindert, dass durch abgedeckte Spinndüsenöffnungen 4 weniger Spinnlösung pro Zeit durchfliest als durch nicht abgedeckte Spinndüsenöffnungen 4.

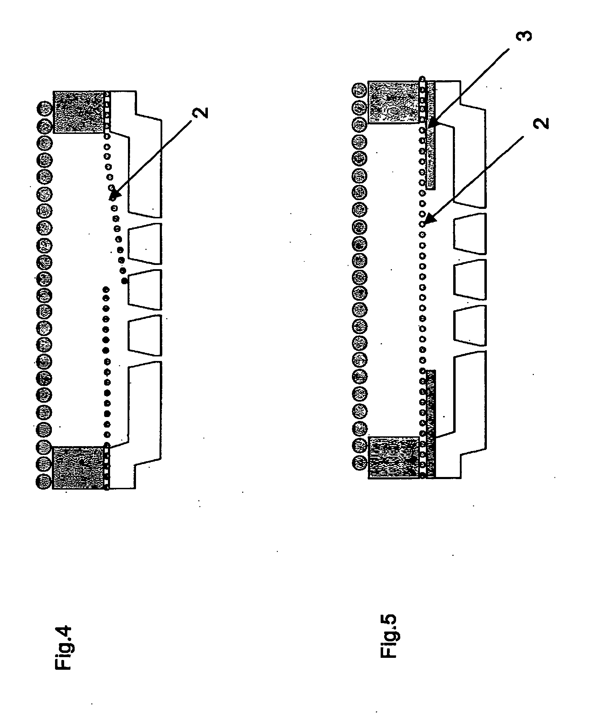

In der Figur 4 ist schematisch dargestellt, dass der Strömungswiderstand 2 in etwa mittig auseinander gebrochen ist. Eine solche Beschädigung des Strömungswiderstandes 2 kann während des Spinnprozesses dadurch entstehen, dass der Strömungswiderstand 2 dem Druck der Spinnlösung nicht Stand hält. Bei einer Beschädigung des Strömungswiderstandes 2, wie sie in der Figur 4 dargestellt ist, ist die Beruhigung des Spinnprozesses und somit ein langanhaltender Spinnprozess nicht mehr möglich.

In der Figur 5 ist schematisch dargestellt, wie eine Beschädigung des Strömungswiderstandes 2 trotz einer sehr feinen und unstabilen Struktur 5 verhindert werden kann. Hierzu wird der Strömungswiderstand 2 von der Stützstruktur 3 abgestützt. Die Stützstruktur 3 ist im Ausführungsbeispiel der Figur 5 als Platte 3 ausgebildet, wobei die Platte 3 jedoch nur den Randbereich der Spinndüsenplatte 6 abdeckt. Die Spinndüsenöffnungen 4 werden von der Stützstruktur 3 nicht abgedeckt. Der Strömungswiderstand 2 liegt im Ausführungsbeispiel zumindest in den Randbereichen auf der Platte 3 auf. Hierdurch wird die Biegespannung, die aus dem Biegemoment für den Strömungswiderstand 2 resultiert, geringer, wodurch die Gefahr einer Beschädigung des Strömungswiderstandes 2 verringert wird. Die Stützstruktur 3 kann, wie im Ausführungsbeispiel gemäß Figur 5, nur im Randbereich der Spinndüsenplatte 6 vorgesehen sein oder sich über den gesamten Querschnitt der Spinndüsenplatte 6 erstrecken. Im letzteren Fall weist die Stützstruktur 3 Ausschnitte auf, wobei die Ausschnitte oberhalb der Spinndüsenöffnungen 4 vorgesehen sind (siehe Erklärung zu Figur 1). In vorteilhafter Weise werden auch so die Spinndüsenöffnungen 4 nicht von der Stützstruktur 3 abgedeckt.

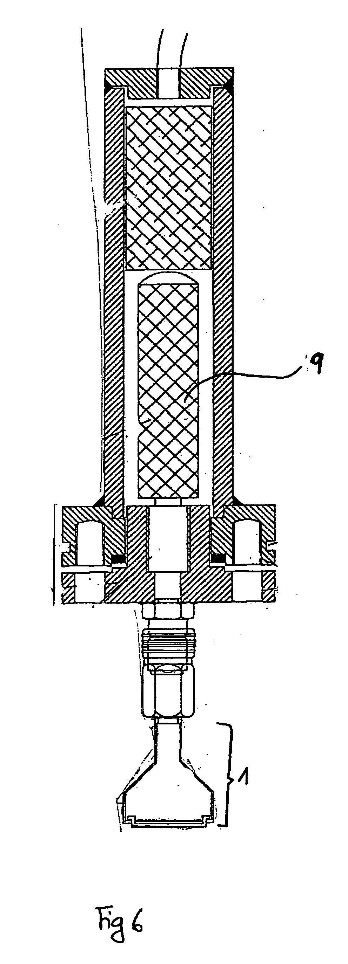

In der Figur 6 ist schematisch eine Vorrichtung zum Spinnen von Garnen dargestellt. Die Vorrichtung weist eine Spinndüsenanordnung 1 und weitere Bauteile auf. Innerhalb der Spinndüsenanordnung 1 befindet sich der Strömungswiderstand 2, der Filter 8 und die Spindüsenplatte 6 mit den feldartig verteilten Spinndüsenöffnungen 4. Im vorgeschlagenen Verfahren wird die Spinnlösung, bevor sie der Spinndüsenanordnung 1 zugeführt wird, bevorzugt bereits gefiltert. Hierfür ist in einem Zuleitungsrohr ein zusätzlicher Vor-Filter 9 vorgesehen. Der Filter 8 in der Spinndüsenanordnung 1 dient bei diesem Aufbau einer zweiten Filterung, wobei die Durchlassöffnungen des Filters 8 in der Spinndüsenanordnung 1 größer, gleich oder kleiner sein kann als die Durchlassöffnungen des zusätzlichen Vor-Filters 9 im Zuleitungsrohr.

### Beispiel

Für den Spinnprozess wurde eine Spinndüsenplatte mit 2000 Spinndüsenöffnungen verwendet, so dass 2000 Filamente gesponnen werden konnten. Nachdem diese 2000 Filamente in einem Koagulationsbad koaguliert wurden, wurden jeweils 1000 Filamente zu einem Garn zusammengefasst.

Die Spinnvorrichtung zum Spinnen wies eine Spinndüsenplatte mit zwei Feldern auf, wobei jedes Feld jeweils 1000 Spinndüsenöffnungen aufwies und jede Spinndüsenöffnung so groß war, dass eine Kugel mit einem maximalen Durchmesser von 45 µm die Spinndüsenöffnungen passieren konnte. Oberhalb der Spinndüsenöffnungen war ein Filter angeordnet, wobei der Filter aus einem Drahtgeflecht mit einer maximalen Drahtstärke von 70 µm bestand. Die Durchlassöffnungen des Filters waren alle so groß, dass eine Kugel mit einem maximalen Durchmesser von 15 µm die Durchlassöffnungen des Filters passieren konnte. Oberhalb der Spinndüsenöffnungen und unterhalb des Filters war eine Stützstruktur angeordnet, die in ihrer Form einem flachen Metallrad ähnelte und die Spinndüsenöffnungen nicht verdeckte. Auf der Stützstruktur aufliegend war ein Strömungswiderstand positioniert. Der Strömungswiderstand bestand ebenfalls aus einem Drahtgeflecht, wobei der Draht eine Drahtstärke von 25 µm hatte. Die Durchlassöffnungen des Strömungswiderstandes waren alle so groß, dass eine Kugel mit einem maximalen Durchmesser von 25 µm die Durchlassöffnungen des Strömungswiderstandes passieren konnte. Der Abstand zwischen der Stützstruktur und den Spinndüsenöffnungen betrug 5 mm.

Unterhalb der Spinndüsenöffnungen war ein Koagulationsbad angeordnet, wobei der Abstand zwischen den Spinndüsenöffnungen und dem Koagulationsbad (also der sogenannte Luftspalt) 6 mm betrug.

Als Spinnlösung wurde eine optisch anisotrope Spinnlösung aus Poly(paraphenylenterephthalamid) mit einer Polymerkonzentration von 19,89%, gelöst in 99,8 % Schwefelsäure, eingesetzt. Die Spinnlösung hatte eine Temperatur von 86°C. Nachdem die Spinnlösung erst den Filter, dann den Strömungswiderstand und am Schluss die Spinndüsenöffnungen passiert hat, wurden die Filamente im Luftspalt auf das 12,3 fache verstreckt. Die verstreckten Filamente gelangten anschließend in das Koagulationsbad. Das wässrige Koagulationsbad mit einer Schwefelsäurenkonzentration von 10% hatte eine Tiefe von 12 mm und eine Temperatur von 5 °C. Anschließend wurden die Filamente gewaschen (demineralisiertes Wasser), neutralisiert (0.73 % NaOH in Wasser), erneut gewaschen (demineralisiertes Wasser) und bei einer Temperatur von 165 °C getrocknet. Danach wurden die Filamente mit einer Aufwickelgeschwindigkeit von 300m/min aufgewickelt.

Die nach diesem Verfahren und mit dieser Vorrichtung gesponnenen Garne wiesen eine Filament-Feinheit von 0,475 dtex, eine Festigkeit von 2740 -2820 mN/tex, eine Bruchdehnung von 3,4-3,5 % und ein Elastizitätsmodul von 108-110 GPa auf. Der Garntiter eines jeden Garns betrug 475 dtex. Die gemessenen Angaben wurden nach dem Standard ASTM D - 885 bestimmt.

### Bezugszeichenliste

- 1: Spinndüse
- 2: Strömungswiderstand
- 3: Stützstruktur / Platte
- 4: Spinndüsenöffnung
- 5: Struktur Strömungswiderstand
- 5': Struktur Filter
- 6: Spinndüsenplatte
- 7: Abstandshalter
- 8: Filter
- d₁: Durchmesser Durchlassöffnung Filter
- d₂: Durchmesser Durchlassöffnung Strömungswiderstand

## Patentansprüche

1. Verfahren zur Herstellung eines Filamentgarns aus einem aromatischen Polyamid, bei welchen eine optisch anisotrope-Aramid-Spinnlösung mittels eines Filters (8) mit Durchlassöffnungen innerhalb einer Spinndüsenanordnung (1) gefiltert und innerhalb der Spinndüsenanordnung (1) durch eine Mehrzahl von Spinndüsenöffnungen (4) extrudiert wird, wobei die extrudierte anisotrope-Aramid-Spinnlösung durch einen Luftspalt geführt, dabei verstreckt und in einem wässrigen Koagulationsbad gesammelt wird, **dadurch gekennzeichnet, dass** die optisch anisotrope-Aramid-Spinnlösung in der Spinndüsenanordnung (1) über einen Strömungswiderstand (2) den Spinndüsenöffnungen (4) zugeführt wird, wobei der Strömungswiderstand (2) näher an den Spinndüsenöffnungen (4) angeordnet wird als der Filter (8) und der Strömungswiderstand (2) und der Filter (8) beabstandet zueinander sind.

2. Verfahren nach Anspruch 1, **dadurch gekennzeichnet, dass** der Filter (8) und der Strömungswiderstand (2) Durchlassöffnungen aufweisen, wobei die Durchlassöffnungen des Filters (8) kleiner sind als die Durchlassöffnungen des Strömungswiderstandes (2).

3. Verfahren nach Anspruch 1 oder 2, **dadurch gekennzeichnet, dass** die Größe der Durchlassöffnungen des Filters (8) so groß sind, dass eine Kugel mit einem maximalen Durchmesser von × µm die Durchlassöffnungen des Filters (8) passieren kann, und wobei die Größe der Durchlassöffnungen des Strömungswiderstands (2) so groß sind, dass eine Kugel mit einem maximalen Durchmesser von y µm die Durchlassöffnungen des Strömungswiderstandes (2) passieren kann, wobei x < y.

4. Verfahren nach einem der vorhergehenden Ansprüche, **dadurch gekennzeichnet, dass** der Durchmesser der Spinndüsenöffnungen (4) so groß ist, dass eine Kugel mit einem maximalen Durchmesser z µm die Spinndüsenöffnungen (4) passieren kann, und wobei die Größe der Durchlassöffnungen des Strömungswiderstands (2) so groß sind, dass eine Kugel mit einem maximalen Durchmesser von y µm die Durchlassöffnungen des Strömungswiderstandes (2) passieren kann, wobei z≥y.

5. Verfahren nach einem der vorhergehenden Ansprüche, **dadurch gekennzeichnet, dass** die Spinndüsenöffnungen (4) einen Durchmesser von 30 µm bis 70 µm aufweisen.

6. Verfahren nach einem der vorhergehenden Ansprüche, **dadurch gekennzeichnet, dass** die Spinndüsenöffnungen (4) einen Durchmesser von 40 µm bis 50 µm aufweisen.

7. Verfahren nach einem der vorhergehenden Ansprüche, **dadurch gekennzeichnet, dass** die Größe der Durchlassöffnungen des Strömungswiderstands (2) so groß sind, dass Kugeln mit einem maximalen Durchmesser von 5 µm bis 70 µm die Durchlassöffnungen des Strömungswiderstandes (2) passieren können.

8. Verfahren nach einem der vorhergehenden Ansprüche, **dadurch gekennzeichnet, dass** die Größe der Durchlassöffnungen des Filters (8) so groß sind, dass Kugeln mit einem maximalen Durchmesser von 1 µm bis 30 µm die Durchlassöffnungen des Filters (8) passieren können.

9. Para-aromatisches Polyamidfilamentgarn mit einem Garntiter von wenigstens 300 dtex und einer Festigkeit von mindestens 2.700 mN/tex, bestehend aus einem Bündel von Filamenten mit einem Filamenttiter von 0,8 bis mehr als 0,3 dtex.

10. Polyamidfilamentgarn nach Anspruch 9, **dadurch gekennzeichnet, dass** es eine Festigkeit von mindestens 2.750 mN/tex und einen Filamenttitter von 0,6 bis 0,4 dtex aufweist.

11. Flächengebilde aufweisend ein Polyamidfilamentgarn gemäß der Ansprüche 9 oder 10.

12. Penetrationshemmender Artikel aufweisend ein Polyamidfilamentgarn gemäß der Ansprüche 9 oder 10.

## Claims

1. A method for producing a filament yarn from an aromatic polyamide, in which an optically anisotropic aramid spinning solution is filtered within a spinneret arrangement (1) by means of a filter (8) having passage openings and is extruded within the spinneret arrangement (1) through a plurality of spinning orifices (4), wherein the extruded anisotropic aramid spinning solution is guided through an air gap, stretched in the process, and collected in an aqueous coagulation bath, **characterized in that** the optically anisotropic aramid spinning solution in the spinneret arrangement (1) is fed to the spinning orifices (4) via a flow resistor (2), wherein the flow resistor (2) is arranged closer to the spinning orifices (4) than the filter (8), and the flow resistor (2) and the filter (8) are arranged at a distance to one another.

2. A method according to Claim 1, **characterized in that** the filter (8) and the flow resistor (2) have passage openings, wherein the passage openings of the filter (8) are smaller than the passage openings of the flow resistor (2).

3. A method according to Claim 1 or 2, **characterized in that** the size of the passage openings of the filter (8) is large enough that a ball having a maximum diameter of x µm can pass through the passage openings of the filter (8), and wherein the size of the passage openings of the flow resistor (2) is large enough that a ball having a maximum diameter of y µm can pass through the passage openings of the flow resistor (2), wherein x < y.

4. A method according to one of the previous claims, **characterized in that** the diameter of the spinning orifices (4) is large enough that a ball having a maximum diameter of z µm can pass through the spinning orifices (4), and wherein the size of the passage openings of the flow resistor (2) is large enough that a ball having a maximum diameter of y µm can pass through the passage openings of the flow resistor (2), wherein z ≥ y.

5. A method according to one of the previous claims, **characterized in that** the spinning orifices (4) have a diameter from 30 µm to 70 µm.

6. A method according to one of the previous claims, **characterized in that** the spinning orifices (4) have a diameter from 40 µm to 50 µm.

7. A method according to one of the previous claims, **characterized in that** the size of the passage openings of the flow resistor (2) is large enough that balls having a maximum diameter of 5 µm to 70 µm can pass through the passage openings of the flow resistor (2).

8. A method according to one of the previous claims, **characterized in that** the size of the passage openings of the filter (8) is large enough that balls having a maximum diameter of 1 µm to 30 µm can pass through the passage openings of the filter (8).

9. A para-aromatic polyamide filament yarn having a yarn count of at least 300 dtex and a tenacity of at least 2700 mN/tex, consisting of a bundle of filaments having a filament linear density of 0.8 to more than 0.3 dtex.

10. A polyamide filament yarn according to Claim 9, **characterized in that** said yarn has a tenacity of at least 2750 mN/tex and a filament linear density of 0.6 to 0.4 dtex.

11. A fabric having a polyamide filament yarn according to Claim 9 or 10.

12. A penetration-resistant article having a polyamide filament yarn according to Claim 9 or 10.

## Revendications

1. Procédé de fabrication d'un fil continu de polyamide aromatique, dans lequel une solution de filage d'aramide optiquement anisotrope est filtrée au moyen d'un filtre (8) comportant des ouvertures de passage situées à l'intérieur d'un dispositif de buse de filage (1) et est extrudée à l'intérieur du dispositif de buse de filage (1) à travers une pluralité d'ouvertures de buse de filage (4), la solution de filage d'aramide optiquement anisotrope extrudée passant dans une lame d'air, y subissant un étirage et étant collectée dans un bain de coagulation aqueux, **caractérisé en ce que** la solution de filage d'aramide optiquement anisotrope présente dans le dispositif de buse de filage (1) est amenée aux ouvertures de buse de filage (4) en passant par un organe de résistance à l'écoulement (2), l'organe de résistance à l'écoulement (2) étant disposé plus près des ouvertures de buse de filage (4) que le filtre (8) et l'organe de résistance à l'écoulement (2) et le filtre (8) étant disposés avec un écart entre eux.

2. Procédé selon la revendication 1 **caractérisé en ce que** le filtre (8) et l'organe de résistance à l'écoulement (2) présentent des ouvertures de passage, les ouvertures de passage du filtre (8) étant plus petites que les ouvertures de passage de l'organe de résistance à l'écoulement (2).

3. Procédé selon la revendication 1 ou 2 **caractérisé en ce que** la dimension des ouvertures de passage du filtre (8) est suffisante pour qu'une bille d'un diamètre maximum de x micromètres puisse passer dans les ouvertures de passage du filtre (8) et la dimension des ouvertures de passage de l'organe de résistance à l'écoulement (2) est suffisante pour qu'une bille d'un diamètre maximum de y micromètres puisse passer dans les ouvertures de passage de l'organe de résistance à l'écoulement (2), x étant < y.

4. Procédé selon l'une des revendications qui précèdent, **caractérisé en ce que** le diamètre des ouvertures de buse de filage (4) est suffisant pour qu'une bille d'un diamètre maximum de z micromètres puisse passer dans les ouvertures de buse de filage (4), la dimension des ouvertures de passage de l'organe de résistance à l'écoulement (2) étant suffisante pour qu'une bille d'un diamètre maximum de y micromètres puisse passer dans les ouvertures de passage de l'organe de résistance à l'écoulement (2), z étant ≥ y.

5. Procédé selon l'une des revendications qui précèdent, **caractérisé en ce que** les ouvertures de buse de filage (4) présentent un diamètre compris entre 30 micromètres et 70 micromètres.

6. Procédé selon l'une des revendications qui précèdent, **caractérisé en ce que** les ouvertures de buse de filage (4) présentent un diamètre compris entre 40 micromètres et 50 micromètres.

7. Procédé selon l'une des revendications qui précèdent, **caractérisé en ce que** la dimension des ouvertures de passage de l'organe de résistance à l'écoulement (2) est suffisante pour que des billes d'un diamètre maximum de 5 micromètres à 70 micromètres puissent passer dans les ouvertures de passage de l'organe de résistance à l'écoulement (2).

8. Procédé selon l'une des revendications qui précèdent, **caractérisé en ce que** la dimension des ouvertures de passage du filtre (8) est suffisante pour que des billes d'un diamètre maximum de 1 micromètre à 30 micromètres puissent passer dans les ouvertures de passage du filtre (8).

9. Fil continu en polyamide para-aromatique doté d'un titre d'au moins 300 dtex et d'une résistance d'au moins 2700 mN/tex, constitué d'un faisceau de filaments dotés d'un titre allant de 0,8 dtex à plus que 0,3 dtex.

10. Fil continu en polyamide selon la revendication 9 **caractérisé en ce qu'**il présente une résistance d'au moins 2750 mN/tex et d'un titre de filament compris entre 0,6 et 0,4 dtex.

11. Produit plat présentant un fil continu en polyamide selon la revendication 9 ou la revendication 10.

12. Article anti-pénétration présentant un fil continu en polyamide selon la revendication 9 ou la revendication 10.
